(19) Europäisches Patentamt
European Patent Office
Office européen des brevets

(11) Veröffentlichungsnummer : **0 139 895 B2**

# (12) NEUE EUROPÄISCHE PATENTSCHRIFT

(45) Veröffentlichungstag der neuen Patentschrift :
**11.11.92 Patentblatt 92/46**

(51) Int. Cl.$^5$ : **C08G 18/18**, C08G 18/16, C09J 175/04

(21) Anmeldenummer : **84108996.4**

(22) Anmeldetag : **30.07.84**

## (54) Verwendung von Ammoniumsalzen als latente Katalysatoren für die Isocyanat-Polyadditionsreaktion.

Die Akte enthält technische Angaben, die nach dem Eingang der Anmeldung eingereicht wurden und die nicht in dieser Patentschrift enthalten sind.

(30) Priorität : **09.08.83 DE 3328661**

(43) Veröffentlichungstag der Anmeldung :
**08.05.85 Patentblatt 85/19**

(45) Bekanntmachung des Hinweises auf die Patenterteilung :
**31.05.89 Patentblatt 89/22**

(45) Bekanntmachung des Hinweises auf die Entscheidung über den Einspruch :
**11.11.92 Patentblatt 92/46**

(84) Benannte Vertragsstaaten :
**BE DE FR GB IT**

(56) Entgegenhaltungen :
**EP-A- 0 133 680**
**DE-A- 3 227 489**
**DE-B- 1 297 334**
**GB-A- 802 375**
**GB-A- 844 525**
**GB-A- 893 240**
**US-A- 2 692 874**
**US-A- 3 226 354**

(73) Patentinhaber : **BAYER AG**
**W-5090 Leverkusen 1 Bayerwerk (DE)**

(72) Erfinder : **Kerimis, Dimitrios, Dr.**
**Pulheimer Strasse 15**
**W-5000 Köln 71 (DE)**
Erfinder : **Hombach, Rudolf, Dr.**
**Joh.-Jansssen-Strasse 24**
**W-5090 Leverkusen (DE)**
Erfinder : **Müller, Hanns Peter, Dr.**
**Im Kerberich 6**
**W-5068 Odenthal-Blecher (DE)**
Erfinder : **Dollhausen, Manfred, Dr.**
**Herzogenfeld 21**
**W-5068 Odenthal (DE)**

EP 0 139 895 B2

Jouve, 18, rue Saint-Denis, 75001 PARIS

## Beschreibung

Die Erfindung betrifft die Verwendung von Ammoniumsalzen, wie sie durch Umsetzung von primären, sekundären und/oder Aminen mit bestimmten alkylierend wirkenden Phosphonsäureestern erhalten werden können, als latente, wärmeaktivierbare Katalysatoren bei der Herstellung von Verklebungen auf Polyurethanbasis.

Katalysatoren für die Durchführung des Isocyanat-Polyadditionsverfahrens sind in großer Zahl bekannt. Als Katalysatoren seien beispielsweise genannt: Tertiäre Amine, wie Triethylendiamin (Dabco) und organische Zinnverbindungen, wie Zinn(II)-octoat. Weitere Vertreter der aus der Polyurethan-Chemie an sich bekannten Katalysatoren sind z. B. solche, wie sie in der DE-A-2 854 384 auf den Seiten 26 - 29 und 31 - 33 genannt sind.

Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Ein Nachteil dieser bekannten Katalysatoren ist darin zu sehen, daß sie in dem, für die technische Polyurethanchemie insbesondere relevanten Temperaturbereich von ca. 20 - 120° C eine nahezu konstante Aktivität aufweisen, so daß es nicht möglich ist, derartige Katalysatoren enthaltende Formulierungen aus Polyolen und Polyisocyanaten einer erhöhten Topfzeit herzustellen, da die Katalysatoren bereits bei Raumtemperatur die Isocyanat-Additionsreaktion beschleunigen.

Die ältere EP-A-102 482 betrifft die Trimerisierung von Isocyanaten in Gegenwart von Umsetzungsprodukten aus Aminen und Phosphonsäureesten. GB-A-893 240 und DE-B-1 297 334 betreffen die Polyurethanschaumherstellung in Gegenwart von Salzen aus Aminen und einer Phosphorsäure als Katalysatoren, wobei die Thermoaktivierbarkeit dieser Salze aber nicht hinreichend ist.

Aufgabe der Erfindung war es daher, neue Katalysatoren zur Verfügung zu stellen, die erst bei Wärmezutritt ihre katalytische Wirkung entfalten, so daß unter dem Einfluß von Wärme sehr schnell vernetzbare, bei Raumtemperatur jedoch eine erhöhte Lagerstabilität aufweisende Zweikomponenten-Formulierungen hergestellt werden können. Mit solchen Katalysatorsystemen ließen sich z. B. Polyol-Polyisocyanat-Aktivator-Formulierungen mit bei Raumtemperatur langen Topfzeiten herstellen, die bei Wärmezufuhr innerhalb kürzester Zeit vernetzen und als Klebstoffe eingesetzt werden können.

Diese Aufgabe konnte überraschenderweise durch die nachstehend näher beschriebene erfindungsgemäße Verwendung gelöst werden.

Gegenstand der Erfindung ist die Verwendung von Ammoniumsalzen, erhältlich durch Umsetzung von

i) mono- oder polyfunktionellen, primären, sekundären und/oder tertiären Aminen

mit wenigstens einem

ii) alkylierend wirkenden Phosphonsäureester der Formel

$$R-\overset{\overset{O}{\|}}{P}(OR')_2$$

in welcher

R für einen gegebenenfalls inerte Substituenten aufweisenden aromatischen Kohlenwasserstoffrest, insbesondere Phenylrest oder einen aliphatischen Kohlenwasserstoffrest, insbesondere einen Alkylrest mit 1 bis 4 Kohlenstoffatomen steht, und

R′ für gleiche oder verschiedene aliphatische Kohlenwasserstoffreste insbesondere Alkylreste mit 1 bis 4 Kohlenstoffatomen stehen,

in einem Äquivalent verhältnis von alkylierend wirkendem Phosphonsäureester einerseits zu primären, sekundären und/oder tertiären Aminstickstoffatomen andererseits von 1 : 1, als latente, wärmeaktivierbare Katalysatoren für die umsetzung zwishen Polyisocyanaten und Verbindungen mit mindestens zwei gegenüber Isocyanaten reaktionsfähigen Wasserstoffatomen und einem Molekulargewicht von 400 bis 10 000 in Zweikomponenten Klebsloffen bei der Herstellung von Verklebungen beliebiger wärmeresistenter Substrate.

Als Komponente (i) der erfindungsgemäß einzusetzenden Ammoniumsalze kommen im Prinzip beliebige organische Verbindungen in Betracht, die mindestens eine, vorzugsweise nichtaromatisch gebundene, gegebenenfalls Teil eines heterocyclischen Ringsystems darstellende primäre, sekundäre und/oder tertiäre Aminogruppe aufweisen. In diesen Aminogruppen ist das Aminstickstoffatom durch drei Einfachbindungen mit nichtaromatischen Kohlenstoffatomen und gegebenenfalls Wasserstoff verknüpft. Neben diesen Aminogruppen können die Amine noch weitere Heteroatome wie z. B, Sauerstoff oder Doppelbindungen aufweisende Stickstoffatome aufweisen. Die Komponente (i) weist im allgemeinen ein Molekulargewicht von 31 bis 300, vorzugsweise 101 bis 200 auf.

Beispiele geeigneter Amine sind Methylamin, Ethylamin, Diethylamin, Triethylamin, Tri-(n-propyl)-amin, Di-(n-butyl)-amin, N-Methyl-N,N-di(n-butyl)-amin, Piperidin, N-Methyl-piperidin, Morpholin, N-Methyl-morpholin, permethyliertes Diethylentriamin, Diethylentriamin, Triethylendiamin, Diethanolamin, Dipropanolamin, Triethanolamin, N,N-Dimethyl-benzylamin, Ethylendiamin, Hexamethylendiamin, nicht-cyclische Amidine wie z. B, N,N'-Dimethylacetamidin, N,N'-Dicyclohexyl-N-methyl-acetamidin, monocyclische Amidine wie z. B. 2,3-Dimethyl-3,4,5,6-tetrahydropyrimidin oder bi-cyclische Amidine wie z. B. 1,5-Diazabicyclo(3.4.0)non-5-en oder 1,8-Diazabicyclo (5.4.0)undec-7-en,

Neben diesen beispielhaft offenbarten, bevorzugten Aminen können zur Herstellung der erfindungsgemäß zu verwendenden Ammoniumsalze auch heterocyclische Amine, deren Aminstickstoffatom Teil eines heteroaromatischen Rings ist, wie z. B. Pyridin oder 1-Methyl-pyridin oder aromatische Amine wie z. B. Anilin oder N,N-Dimethylanilin eingesetzt werden. Derartige Amine sind im Vergleich zu den erstgenannten Aminen weniger bevorzugt.

Typische Beispiele geeigneter Katalysatorkomponenten (ii) sind Benzolphosphonsäure-dimethylester, p-Toluolphosphonsäurediethylester, Methanphosphonsäuredimethylester, n-Butanphosphonsäurediethylester, Ethanphosphonsäurediethylester oder Ethanphosphonsäuredimethylester.

Die erfindungswesentlichen Katalysatoren bzw. ihre Herstellung sind im Prinzip bekannt (Houben-Weyl, Band XII/2, Seiten 262 ff). Bei der Herstellung der Katalysatoren kann beispielsweise so vorgegangen werden, daß die beispielhaft genannten Einzelkomponenten (i) und (ii) so miteinander umgesetzt werden, daß im Endprodukt alle Aminstickstoffatome in alkylierter Form vorliegen. Dies bedeutet, daß die Reaktion in einem Molverhältnis von Aminogruppen zu alkylierend wirkendem Ester von 1 : 1 abläuft, wobei im Falle der Verwendung von Amidinen, das eine Doppelbindung aufweisende Stickstoffatom nicht in diese Berechnung eingeht. Im allgemeinen wird ein beliebig hoher Überschuß der Komponnte (ii) eingesetzt, der vorzugsweise nach Beendigung der Alkylierungsreaktion, beispielsweise durch Destillation, entfernt wird. Die Umsetzung der Einzelkomponenten (i) und (ii) erfolgt vorzugsweise in Substanz innerhalb des Temperaturbereichs von 50 bis 200°C, vorzugsweise 80 bis 180°C während eines Zeitraums von ca. 0,5 bis 15 Stunden. Im allgemeinen erfolgt die Umsetzung dergestalt, daß man die Reaktionspartner am Rückfluß kocht. Oft ist es vorteilhaft, die Umsetzung unter Inertgasatmosphäre und/oder unter Druck durchzuführen. Die Reaktionsdauer und -temperatur richtet sich selbstverständlich in erster Linie nach der Reaktivität der jeweils zum Einsatz gelangenden Einzelkomponenten (i) und (ii). Bei Verwendung von einwertigen, leichtflüchtigen Aminen können selbstverständlich auch diese im Überschuß eingesetzt und der verbleibende Überschuß anschließend destillativ vom Reaktionsprodukt abgetrennt werden.

Die erfindungsgemäß zu verwendenden Katalysatoren können auch durch Neutralisation geeigneter Amine mit einbasischen, sauren Phosphonsäureestern erhalten werden.

Da in den erfindungsgemäß zu verwendenden Ammoniumsalzen ausschließlich sekundäre, ternäre oder quaternäre Ammoniumionen als Kationen vorliegen, kommen bei dieser Art der Herstellung nur solche der oben beispielhaft Benannten Art in Betracht, die ausschließlich sekundäre und/oder tertiäre Aminogruppen aufweisen.

Eine Variante dieser Ausführungsform der Herstellung der erfindungsgemäß zu verwendenden Katalysatoren besteht darin, daß man die Katalysatoren in situ während der Herstellung des zum Polyurethan ausreagierenden Reaktionsgemisches herstellt, indem man z. B. das Amin in der Polyolkomponente und den sauren Phosphonsäureester in der Polyisocyanatkomponente löst, so daß bei der Vereinigung der beiden, zum Polyurethan ausreagierenden Komponenten der erfindungsgemäß zu verwendende Katalysator durch eine augenblicklich ablaufende Neutralisationsreaktion entsteht. Bei der Herstellung der erfindungsgemäß zu verwendenden Katalysatoren durch eine Neutralisationsreaktion gelten die obengemachten Ausführungen bezüglich der Mengenverhältnisse sinngemäß; auch hier kann eine gegebenenfalls im Überschuß zum Einsatz Bebrachte, leichterflüchtige Komponente im Anschluß an die Reaktion destillativ vom Reaktionsprodukt abgetrennt werden. Bei der Herstellung der Katalysatoren in situ werden vorzugsweise äquivalente Mengen der Reaktionspartner eingesetzt. Die Neutralisation kann selbstverständlich bei Raumtemperatur erfolgen.

Bei den erfindungsgemäß zu verwendenden Katalysatoren handelt es sich im allgemeinen um farblose bis gelbe, geruchsloche Flüssigkeiten oder niedrig schmelzende kristalline Verbindungen, welche bei Temperaturen von unterhalb 30°C, vorzugsweise unterhalb 20°C ohne nennenswerte katalytische Aktivität bezüglich der Isocyanat-additionsreaktion sind. Erst bei Temperaturen oberhalb 60°C, insbesondere innerhalb des Temperaturbereichs von 90 - 150°C, vorzugsweise 90 - 130°C kommt es zu einer ausgeprägten katalytischen Wirkung der erfindungsgemäß zu verwendenden Katalysatoren. Hierdurch wird erreicht daß einerseits die lagerstabilität von, erfindungsgemäß zu verwendende Katalysatoren enthaltenden Reaktionsgemischen aus Polyisocyanaten und Polyolen bei den genannten niedrigen Temperaturen nur wenig unter der lagerstabilität entsprechender, unkatalysierter Reaktionsgemische liegt, während andererseits bei höheren Temperaturen innerhalb der genannten Bereiche eine meist erwünschte starke Beschleunigung der Isocyanat-Additonsreaktion erfolgt.

Die erfindungswesentlichen Katalysatoren können in allen beliebigen, zu Polyurethan ausreagierenden Reaktionsgemischen eingesetzt werden, bei denen die genannte Eigenschaftkombination einer erhöhten Verarbeitungzeit einerseits und einer schneller umsetzung bei höheren Temperaturen andererseits erwünscht ist. Hierzu gehören die Herstellung von Verklebungen beliebiger wärme- bzw. hitzeresistenter Substrate unter Verwendung von Zweikomponenten-Klebstoffen auf Basis eines Reaktionsgemisches aus organischen Polyisocyanaten und organischen Polyhydroxylverbindungen und Hitzevernetzung der Klebeschicht.

Die erfindungswesentlichen Katalysatoren können im Prinzip in beliebigen Zweikomponenten-Polyurethansystemen auf Basis von organischen Polyisocyanaten und mindestens difunktionellen Verbindungen mit gegenüber Isocyanatgruppen reaktionsfähigen Gruppen eingesetzt werden.

Als Polyisocyanatkomponente kommen beliebige aliphatische, cycloaliphatische, araliphatische, aromatische oder heterocyclische Polyisocyanate bzw. beliebige Gemische derartiger Polyisocyanate in Betracht. Gut geeignet sind beispielsweise Polyisocyanate der Formel

$$Q(NCO)_n$$

in der

n = 2 - 4, vorzugsweise 2, und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 5 - 10 C-Atomen, einen aromatischen Kohlenwasserstoffrest mit 6 - 15, vorzugsweise 6 - 13 C-Atomen, oder einen araliphatischen Kohlenwasserstoffrest mit 8 - 15, vorzugsweise 8 - 13 C-Atomen,

bedeuten, z. B. solche Polyisocyanate, wie sie in der DE-OS-2 832 253, auf den Seiten 10 - 11 beschrieben werden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden polyisocyanate ("modifizierte polyisocyanate"), insbesondere solche modifizierten Polyisocyanate, die sich vom 2,4- und/oder 2,6-Toluylendiisocyanat bzw. von 4,4′- und/oder 2,4′-Diphenylmethandiisocyanat ableiten.

Reaktionspartner für die Polyisocyanate bei der Herstellung der Polyurethane sind beispielsweise Verbindungen mit mindestens zwei gegenüber Isocyanaten reaktionsfähigen Wasserstoffatomen von einem Molekulargewicht in der Regel von 400 - 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 6000, vorzugsweise 2000 bis 4000, z. B. mindestens zwei, in der Regel 2 bis 8, vorzugsweise aber 2 bis 4, Hydroxylgruppen aufweisende Polyester, Polyether, Polythiolether, Polyacetale, Polycarbonate und Polyesteramide, wie sie für die Herstellung von homogenen und von zellförmigen Polyurethanen an sich bekannt sind und wie sie z. B. in der DE-OS 2-832 253, auf den Seiten 11 - 18, beschrieben werden.

Gegebenenfalls können neben diesen höhermolekularen Verbindungen mit gegenüber Isocyanatgruppen reaktionsfähigen Gruppen auch Verbindungen mit mindestens zwei gegenüber Isocyanatgruppen reaktionsfähigen Wasserstoffatomen und einem Molekulargewicht von 32 - 400 zum Einsatz gelangen. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS-2 832 253, auf den Seiten 19 - 20, beschrieben.

Bei der Herstellung der Polyurethane können im übrigen die an sich bekannten Hilfs- und Zusatzmittel mitverwendet werden.

Diese gegebenenfalls mitzuverwendenden Hilfs- und Zusatzstoffe werden beispielsweise in der DE-A-2 732 292, Seiten 21 - 24 beschrieben.

Bei der erfindungsgemäßen Verwendung der erfindungswesentlichen Ammoniumsalze kommen diese im allgemeinen in einer Menge von 0,01 bis 2, vorzugsweise 0,1 bis 1,5 Gew.-%, bezogen auf das gesamte, zum Polyurethan ausreagierende Reaktionsgemisch zum Einsatz. Die erfindungsgemäß zu verwendenden Ammoniumsalze können hierbei der Polyisocyanatkomponenante, der Polyolkomponente und/oder dem Gemisch

aus beiden Komponenten zugesetzt werden.

Die in den nachfolgenden Beispielen eingesetzten, erfindungsgemäß zu verwendenden Ammoniumsalze wurden wie folgt hergestellt:

Ammoniumsalz I

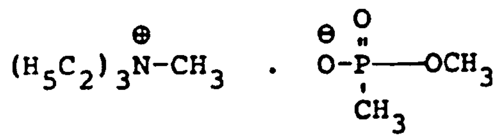

101 Gewichtsteile Triethylamin und 248 Gewichtsteile Methanphosphonsäuredimethylester werden vermischt und unter Rühren 8 Stunden leicht am Rückfluß gekocht. Anschließend wird der überschüssige Methanphosphonsäureester im Vakuum abdestilliert.

Man erhält 140 Gewichtsteile einer gelben viskosen Flüssigkeit.

Ammoniumsalz II

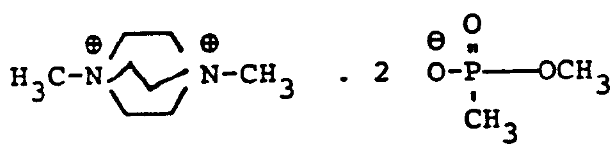

123 Gewichtsteile Triethylendiamin (Dabco) und 1240 Gewichtsteile Methanphosphonsäuredimethylester werden unter leichter Stickstoff-Durchleitung 8 Stunden bei 100°C gerührt. Anschließend werden im Vakuum ca. 400 Gewichtsteile des überschüssigen Methanphosphonsäureesters abdestilliert, das ausgefallene Produkt abfiltriert und im Vakuum getrocknet.

Man erhält 335 Gewichtsteile einer farblosen, kristallinen Verbindung.

Ammoniumsalz III

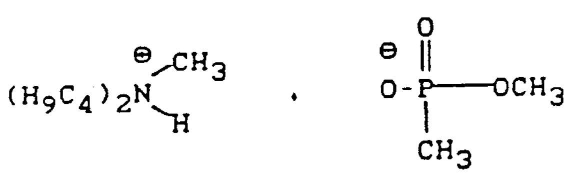

258 Gew.-Teile Dibutylamin und 248 Gew.-Teile Methanphosphonsäuredimethylester werden vermischt und unter Rühren auf 135 bis 150°C hochgeheizt. Nun wird mit einem Eisbad so gekühlt, daß durch die exotherme Reaktion die Temperatur auf 140 bis 150°C gehalten wird. Anschließend rührt man noch 5 Stunden bei 150°C nach. Das erhaltene Produkt wird durch Destillation im Vakuum von mit umgesetzten Ausgangsprodukten befreit.

Man erhält 350 Gew.-Teile einer farblosen, viskosen Flüssigkeit, die bei Raumtemperatur langsam auskristallisiert.

Ammoniumsalz IV

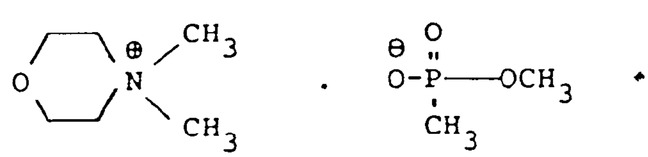

Die Herstellung erfolgte in Analogie zur Herstellung von Ammoniumsalz I, jedoch unter Verwendung einer äquivalenten Menge an N-Methyl-morpholin anstelle des Triethylamins.

Ammoniumsalz V

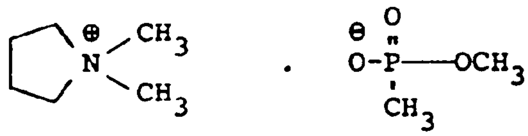

Die Herstellung erfolgte in Analogie zur Herstellung von Ammoniumsalz I, jedoch unter Verwendung einer äquivalente Menge an N-Methyl-pyrrolidin anstelle des Triethylamins.

Die Strukturen der obengenannten Ammoniumverbindungen wurden NMR-spektroskopisch bestätigt.

**Biespiel 1 - 3**

Im nachfolgenden Beispiel 1 wird ein den Wärme-aktivierbaren Katalysator III enthaltender Zweikomponenten-Polyurethan-Reaktionsklebstoff hergestellt. Zu diesem Zweck werden 100 g eines Polyols (40-gew.-%ige, gemäß DE-A-2 719 720 hergestellte Dispersion von Polyhydrazodicarbonamid in einem Polyetherpolyol der OH-Zahl 35, hergestellt durch Propoxylierung von Trimethylolpropan und anschließende Ethoxylierung des Propoxylierungsproduktes (PO/EO-Gew.-Verhältnis = 4,7 : 1) mit 37 g eines Polyisocyanatgemisches der Diphenylmethanreihe (hergestellt durch Phosgenierung von Anilin/Formaldehydkondensaten; NCO-Gehalt = 31 Gew.-%; Viskosität = 500 mPa.s/25°C) verrührt (NCO/OH-Äquivalentverhältnis = 0,8 : 1) und mit 1 Gew.-%, bezogen auf Gesamtgemisch, an Ammoniumsalz III vermischt. Im Vergleichsbeispiel 2 wird das gleiche Reaktionsgemisch mit 0,1 Gew.-%, bezogen auf Gesamtgemisch, Dibutylzinndilaurat (DBTL) als Standard-Katalysator versetzt. Im Vergleichsbeispiel 3 wird das unkatalysierte Reaktionsgemisch eingesetzt.

Als Prüfmaterial dienen Streifen eines ausgehärteten, mit 30 % Glasfaser verstärkten Polyesterharzes der Abmessung 20 x 40 x 4 mm, die ohne weitere Vorbehandlung verwendet werden. Die Streifen werden jeweils 20 x 10 mm einfach überlappt miteinander verklebt. Hierzu werden die Streifen auf 120°C erhitzt, in einer Schichtdicke von 0,2 mm mit der Klebstoffmischung beschichtet und anschließend beide beschichtete Streifen aufeinandergelegt. Nach drei Minuten erfolgte die Prüfung der "Handfestigkeit", um festzustellen, ob die Klebeschicht bereits abgebunden hat. Hiernach werden die Prüfkörper zur Ermittlung der Endfestigheit während 1 h bei 23° C gelagert und schließlich die Scherfestigkeit nach DIN 53 283 ermittelt.

Die Ergebnisse sind in der nachfolgenden Tabelle 1 zusammengefaßt:

| | Beispiel 1<br>1 % Ammoniumsalz III | Beispiel 2<br>0,1 % DBTL<br>(Vergleich) | Beispiel 3<br>ohne Katalysator<br>(Vergleich) |
|---|---|---|---|
| Topfzeit bei 23°C | 45 Min. | 3 Min. | 4 h |
| Handfestigkeit ($N/mm^2$) | >1 | >1 | - |
| Scherfestigkeit (DIN 53 283) ($N/mm^2$) | 8,9* | 9,4* | - |

* bedeutet Materialbruch

Aus den Ergebnissen ist ersichtlich, daß Zweikomponenten-PU-Klebstoffe, die durch Standard-Katalysatoren, wie DBTL so eingestellt sind, daß sie bei 120°C innerhalb von 3 Minuten abbinden (Handfestigkeit), eine Verarbeitungszeit von nur wenigen Minuten aufweisen. Bei Verwendung von erfindungsgemäß einzusetzenden Katalysatoren werden demgegenüber Verarbeitungszeiten von ca. 45 Minuten bei gleicher Scherfestigkeit erzielt.

**Patentansprüche**

1. Verwendung von Ammoniumsalzen, erhältlich durch Umsetzung von

   i) mono- oder polyfunktionellen, primären, sekundären und/oder tertiären Aminen

      mit wenigstens einem

ii) alkylierend wirkenden Phosphonsäureester der Formel

$$R-\overset{\overset{\displaystyle O}{\|}}{P}(OR')_2$$

in welcher

R für einen gegebenenfalls inerte Substituenten aufweisenden aromatischen Kohlenwasserstoffrest oder einen aliphatischen Kohlenwasserstoffrest steht, und

R′ für gleiche oder verschiedene aliphatische Kohlenwasserstoffreste stehen, in einem Äquivalentverhältnis von alkylierend wirkendem Phosphonsäureester einerseits zu primären, sekundären und/oder tertiären Aminstickstoffatomen andererseits von 1:1, als latente, wärmeaktivierbare Katalysatoren für die Umsetzung zwischen Polyisocyanaten und Verbindungen mit mindestens zwei gegenüber Isocyanaten reaktionsfähigen Wasserstoffatomen und einem Molekulargewicht von 400 bis 10 000 in Zweikomponentenklebstoffen bei der Herstellung von Verklebungen beliebiger wärmeresistenter Substrate.

## Claims

1. The use of ammonium salts obtainable by the reaction of
   i) mono- or polyfunctional primary, secondary and/or tertiary amines with at least one
   (ii) alkylating phosphonic acid ester corresponding to the formula

$$R-\overset{\overset{\displaystyle O}{\|}}{P}(OR')_2$$

in which

R stands for an aromatic hydrocarbon group optionally containing inert substituents or an aliphatic hydrocarbon group and

R′ stands for identical or different aliphatic hydrocarbon groups

in an equivalent ratio of alkylating phosphonic acid esters to primary, secondary and/or tertiary amine nitrogen atoms of 1:1, as latent catalysts activated by heat for the reaction between polyisocyanates and compounds having at least two isocyanate reactive hydrogen atoms and a molecular weight of from 400 to 10,000 in two-component adhesives for the production of adhesive bonds on any heat-resistant substrates.

## Revendications

1. Utilisation de sels d'ammonium, pouvant être obtenus par réaction
   i) d'amines primaires, secondaires et/ou tertiaires monofonctionnelles ou polyfonctionnelles avec au moins un
   ii) ester d'acide phosphonique à action alkylante :

$$R-\overset{\overset{\displaystyle O}{\|}}{P}(OR')_2$$

dans laquelle

R représente un reste hydrocarboné aromatique portant éventuellement des substituants inertes ou un reste hydrocarboné aliphatique, et

R′ représente des restes hydrocarbonés aliphatiques identiques ou différents,

dans un rapport d'équivalents de l'ester d'acide phosphonique à action alkylante d'une part, aux atomes d'azote d'amines primaires, secondaires et/ou tertiaires d'autre part, de 1:1, comme catalyseurs latents, activables par la chaleur, pour la réaction entre des polyisocyanates et des composés portant au moins deux

atomes d'hydrogène aptes à réagir vis-à-vis d'isocyanates et d'un poids moléculaire de 400 à 10 000 dans des adhésifs à deux composants pour la réalisation de collages de substrats quelconques résistant à la chaleur.